(19) **Europäisches Patentamt / European Patent Office / Office européen des brevets**

(11) **EP 4 668 132 A1**

(12) **EUROPEAN PATENT APPLICATION**
published in accordance with Art. 153(4) EPC

(43) Date of publication:
**24.12.2025 Bulletin 2025/52**

(21) Application number: **23922624.4**

(22) Date of filing: **14.02.2023**

(51) International Patent Classification (IPC):
***G06F 16/435*** (2019.01)

(52) Cooperative Patent Classification (CPC):
**G06F 16/435**

(86) International application number:
**PCT/JP2023/004942**

(87) International publication number:
**WO 2024/171284 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **UENO Mariko**
  **Tokyo 100-8310 (JP)**

• **NISHIMURA Shinya**
  **Tokyo 100-8310 (JP)**
• **DOMINGUEZ RIOS Luis Ernesto**
  **Tokyo 100-8310 (JP)**
• **KASHIMA Takahiro**
  **Tokyo 100-8310 (JP)**
• **OKA Ryunosuke**
  **Tokyo 100-8310 (JP)**

(74) Representative: **Meissner Bolte Partnerschaft
mbB**
**Patentanwälte Rechtsanwälte**
**Postfach 86 06 24**
**81633 München (DE)**

(54) **INFORMATION PROVISION DEVICE, INFORMATION PROVISION METHOD, AND INFORMATION RECEPTION DEVICE**

(57)    It is an object of the present invention to provide an information providing apparatus and the like capable of providing information preferentially required by a user in a form intelligible to the user. An information providing apparatus according to the present invention includes: a multimedia information database to record therein multimedia information including at least one of text, images, and sounds; an input information acquisition unit to acquire input information input by a user; a similarity calculation unit to calculate similarity between the input information and the multimedia information; a user information database to record therein user information including an attribute and a preference of the user; a providing structure construction unit to construct a providing structure to provide the multimedia information to the user based on the user information recorded in the user information database; and a providing unit to provide, to the user, provided information created based on the similarity calculated by the similarity calculation unit and the providing structure constructed by the providing structure construction unit.

FIG. 1

EP 4 668 132 A1

**Description**

TECHNICAL FIELD

The present invention relates to an information providing apparatus, an information providing method, and an information receiving apparatus to provide multimedia information including at least one of text, images, and sounds to an indefinite number of users.

BACKGROUND ART

As a conventional information providing apparatus, technology of managing video information in units of segments, extracting a portion of interest to a user, and providing the extracted portion to the user is disclosed (see Patent Document 1, for example), for example.

PRIOR ART DOCUMENTS

PATENT DOCUMENT

Patent Document 1: Japanese Patent Application Laid-Open JP 2000-250 944 A

SUMMARY

PROBLEM TO BE SOLVED BY THE INVENTION

In the technology disclosed in Patent Document 1, information of interest to a user is displayed using a preference of the user, but the information is displayed in the same form irrespective of the user. Thus, it cannot be said that information preferentially required by a user is provided in a form intelligible to the user.

The present invention has been conceived to solve such a problem, and it is an object of the present invention to provide an information providing apparatus, an information providing method, and an information receiving apparatus capable of providing information preferentially required by a user in a form intelligible to the user.

MEANS TO SOLVE THE PROBLEM

To solve the above-mentioned problem, an information providing apparatus according to the present invention includes: a multimedia information database to record therein multimedia information including at least one of text, images, and sounds; an input information acquisition unit to acquire input information input by a user; a similarity calculation unit to calculate similarity between the input information acquired by the input information acquisition unit and the multimedia information recorded in the multimedia information database; a user information database to record therein user information including an attribute and a preference of the user; a providing structure construction unit to construct a providing structure to provide the multimedia information to the user based on the user information recorded in the user information database; and a providing unit to provide, to the user, provided information created based on the similarity calculated by the similarity calculation unit and the providing structure constructed by the providing structure construction unit.

EFFECTS OF THE INVENTION

According to the present invention, information preferentially required by the user can be provided in a form intelligible to the user.

These and other objects, features, aspects and advantages of the present invention will become more apparent from the following detailed description when taken in conjunction with the accompanying drawings.

BRIEF DESCRIPTION OF DRAWINGS

FIG. 1      is a block diagram showing one example of a configuration of an information providing apparatus according to Embodiment 1.

FIG. 2      is a diagram showing one example of a hardware configuration of the information providing apparatus according to Embodiment 1.

FIG. 3      is a flowchart showing one example of operation of the information providing apparatus according to Embodiment 1.

FIG. 4      is a diagram showing one example of a providing structure according to Embodiment 1.

FIG. 5      is a diagram showing one example of the providing structure according to Embodiment 1.

FIG. 6      is a diagram showing one example of the providing structure according to Embodiment 1.

FIG. 7      is a diagram showing one example of the providing structure according to Embodiment 1.

FIG. 8      is a diagram showing one example of the providing structure according to Embodiment 1.

FIG. 9      is a diagram showing one example of the providing structure according to Embodiment 1.

FIG. 10     is a diagram showing one example of the providing structure according to Embodiment 1.

FIG. 11     is a diagram showing one example of the providing structure according to Embodiment 1.

FIG. 12     is a block diagram showing one example of a configuration of an information providing apparatus according to Embodiment 2.

FIG. 13     is a flowchart showing one example of operation of the information providing apparatus according to Embodiment 2.

FIG. 14    is a block diagram showing one example of a configuration of an information providing apparatus according to Embodiment 3.

FIG. 15    is a flowchart showing one example of operation of the information providing apparatus according to Embodiment 3.

DESCRIPTION OF EMBODIMENTS

The present invention can be implemented in many different manners, and embodiments described below do not restrict the present invention.

Embodiment 1

1-1. Configuration

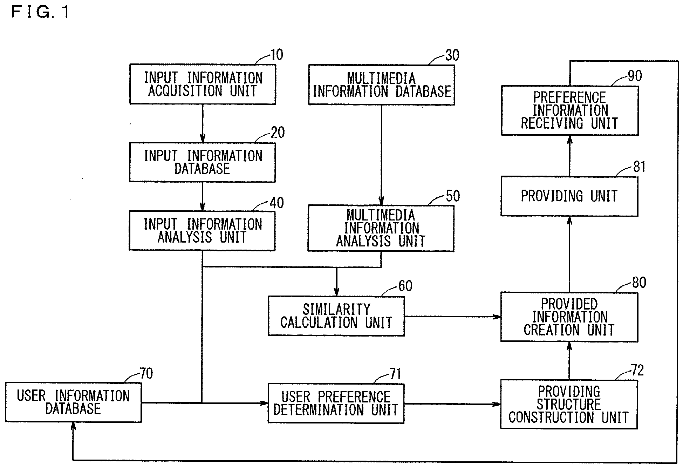

FIG. 1 is a block diagram showing one example of a configuration of an information providing apparatus according to Embodiment 1. As shown in FIG. 1, the information providing apparatus according to Embodiment 1 includes an input information acquisition unit 10, an input information database 20, a multimedia information database 30, an input information analysis unit 40, a multimedia information analysis unit 50, a similarity calculation unit 60, a user information database 70, a user preference determination unit 71, a providing structure construction unit 72, a provided information creation unit 80, a providing unit 81, and a preference information receiving unit 90.

While the input information database 20, the multimedia information database 30, and the user information database 70 are shown separately in FIG. 1 for convenience of description, they may physically or virtually be a single database or a plurality of separate databases. The multimedia information database 30 receives and records therein multimedia information, and the user information database 70 receives and records therein user information, so that it can be said that the information providing apparatus according to Embodiment 1 is an information receiving apparatus to receive information.

The input information acquisition unit 10 acquires input information input by a user. Description will be made below based on the assumption that the input information is search information input by the user to search for desired multimedia information. The search information acquired by the input information acquisition unit 10 is recorded in the input information database 20 in connection with the user having input the search information. Pieces of search information input by a plurality of users are stored in the input information database 20 in connection with the respective users.

A plurality of pieces of multimedia information provided to a user are recorded in the multimedia information database 30. The multimedia information includes at least one of text, images, and sounds. The multimedia information may be recorded (registered) in advance in the multimedia information database 30 and may be added as needed.

The input information analysis unit 40 analyzes the input information recorded in the input information database 20. The multimedia information analysis unit 50 analyzes the multimedia information recorded in the multimedia information database 30.

The similarity calculation unit 60 calculates similarity between the input information analyzed by the input information analysis unit 40 and the multimedia information analyzed by the multimedia information analysis unit 50.

User information including an attribute and a preference of the user is recorded in the user information database 70. An attribute, a specialty, and the like that can be collected during user registration may be registered in advance in the user information database 70. Examples of the attribute of the user include gender, age, a career, a job category, and a feature.

The user preference determination unit 71 determines a preference of the user for the multimedia information based on the user information recorded in the user information database 70.

The providing structure construction unit 72 constructs a providing structure to provide the multimedia information to the user based on the preference of the user determined by the user preference determination unit 71. The provided information creation unit 80 creates provided information to be provided to the user based on the similarity calculated by the similarity calculation unit 60 and the providing structure constructed by the providing structure construction unit 72.

The providing unit 81 provides, to the user, the provided information created by the provided information creation unit 80. The preference information receiving unit 90 receives preference information on the user in response to the provided information provided by the providing unit 81. The preference information on the user received by the preference information receiving unit 90 is information relating to behavior of the user in response to the provided information provided by the providing unit 81 and is recorded in the user information database 70.

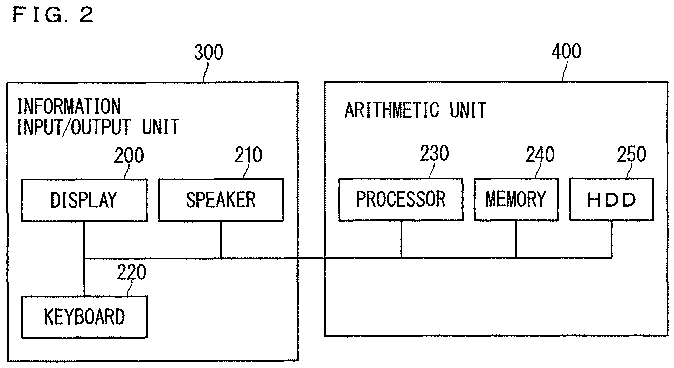

Each of the functions of the information providing apparatus shown in FIG. 1 can be performed using a general computer system. FIG. 2 is a diagram showing one example of a hardware configuration of a computer system for the information providing apparatus according to Embodiment 1.

As shown in FIG. 2, the computer system includes an information input/output unit 300 and an arithmetic unit 400. The information input/output unit 300 and the arithmetic unit 400 may be connected via a communication network.

The information input/output unit 300 includes a display 200, a speaker 210, and a keyboard 220. The input information acquisition unit 10 acquires the input information input by the user via the keyboard 220. The preference information receiving unit 90 acquires the preference information input by the user via the keyboard 220. The display 200 and the speaker 210 correspond to the providing unit 81.

The arithmetic unit 400 includes a processor 230, memory 240, and a hard disk drive (HDD) 250. The HDD 250 corresponds to the input information database 20, the multimedia information database 30, and the user information database 70.

Functions of the input information acquisition unit 10, the input information analysis unit 40, the multimedia information analysis unit 50, the similarity calculation unit 60, the user preference determination unit 71, the providing structure construction unit 72, the provided information creation unit 80, and the preference information receiving unit 90 may be achieved by an unillustrated processing circuit. The processing circuit may be dedicated hardware and may be a processor (also referred to as a CPU, a central processing unit, a processing unit, an arithmetic unit, a microprocessor, a microcomputer, and a digital signal processor (DSP)) to execute a program stored in memory.

When the processing circuit is the dedicated hardware, the processing circuit corresponds to a single circuit, a composite circuit, a programmed processor, a parallel programmed processor, an application specific integrated circuit (ASIC), a field programmable gate array (FPGA), or a combination thereof, for example. Functions of the input information acquisition unit 10, the input information analysis unit 40, the multimedia information analysis unit 50, the similarity calculation unit 60, the user preference determination unit 71, the providing structure construction unit 72, the provided information creation unit 80, and the preference information receiving unit 90 may each be achieved by the processing circuit or may collectively be achieved by the single processing circuit.

When the processing circuit is the processor 230 shown in FIG. 2, the functions of the input information acquisition unit 10, the input information analysis unit 40, the multimedia information analysis unit 50, the similarity calculation unit 60, the user preference determination unit 71, the providing structure construction unit 72, the provided information creation unit 80, and the preference information receiving unit 90 are achieved by software, firmware, or a combination of software and firmware. The software or the firmware is described as a program and is stored in the memory 240 or the HDD 250.

The processor 230 reads and executes the program stored in the memory 240 or the HDD 250 to achieve the functions. The memory herein may be, for example, nonvolatile or volatile semiconductor memory, such as random access memory (RAM), read only memory (ROM), flash memory, erasable programmable read only memory (EPROM), and electrically erasable programmable read only memory (EEPROM), a magnetic disk, a flexible disk, an optical disc, a compact disc, a digital versatile disc (DVD), and the like or any storage medium to be used in the future.

One or more of the functions of the input information acquisition unit 10, the input information analysis unit 40, the multimedia information analysis unit 50, the similarity calculation unit 60, the user preference determination unit 71, the providing structure construction unit 72, the provided information creation unit 80, and the preference information receiving unit 90 may be achieved by the dedicated hardware, and the other one or more of the functions may be achieved by the software or the firmware.

The configuration of the computer system shown in FIG. 2 is one example, and a Braille terminal, a plurality of processors, a solid state drive, a data input/output device, or the like may be included in place of another component or in addition to the other components as long as the information providing apparatus according to Embodiment 1 is achieved.

## 1-2. Operation

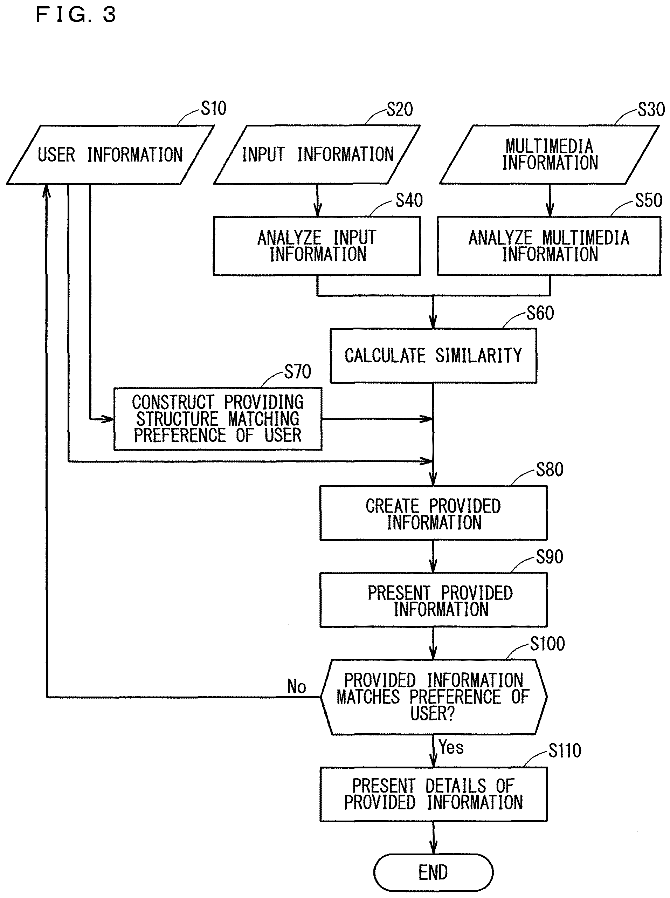

FIG. 3 is a flowchart showing one example of operation (an information providing method) of the information providing apparatus according to Embodiment 1.

The user registers the user information including the attribute and the preference of the user (step S10). The user information registered by the user is recorded in the user information database 70.

The input information acquisition unit 10 acquires the input information input by the user (step S20). Description will be made below based on the assumption that the input information is the search information.

For example, the user may input a sentence (text) or a word as the search information via a keyboard of a computer, may transcribe a sentence or an image via a mouse to input the transcribed sentence or image as the search information, or may input sound information as the search information via a microphone. The search information acquired by the input information acquisition unit 10 is recorded in the input information database 20.

The multimedia information is recorded in the multimedia information database 30 (step S30).

The input information analysis unit 40 analyzes the search information recorded in the input information database 20 (step S40). When the search information is sentence information, the input information analysis unit 40 analyzes the sentence information by morphological analysis, syntax analysis, part-of-speech analysis, reference resolution, or discourse analysis, for example. When the search information is image information, the input information analysis unit 40 analyzes the image information by feature analysis, pattern recognition, image processing, an image database, computer vision, or visualization, for example.

When the search information is the sound information, the input information analysis unit 40 analyzes the sound information by frequency analysis, spectrogram analysis, acoustic analysis, or voice recognition, for example. When the search information is video information, the input information analysis unit 40 analyzes the video information by time series data, for example, in addition to feature analysis, pattern recognition, image processing, the image database, computer vision, visualization, frequency analysis, spectrogram analysis, acoustic analysis, or voice recognition, which is similar analysis to that performed on the image information or the sound information, for example.

The input information analysis unit 40 may combine the above-mentioned analysis methods as appropriate for analysis of multimodal information, such as a combination of the sentence information and the image information and a combination of the image information and the sound information.

While a case where the search information recorded in the input information database 20 is the sentence information, the image information, the sound information, or the video information has been described above as one example, the search information is not limited to these pieces of information. The search information may be information other than these pieces of information. In this case, the input information analysis unit 40 performs analysis according to each piece of information.

A case where the search information is the sentence information will be described below as one example.

The input information analysis unit 40 performs morphological analysis on the sentence input by the user as the search information to break down the sentence into words (step S40).

On the other hand, the multimedia information including at least one of sentences (text), images, and sounds to be searched for is recorded (stored) in advance in the multimedia information database 30 (step S30). The multimedia information analysis unit 50 performs similar analysis to that performed by the input information analysis unit 40 on the multimedia information recorded in the multimedia information database 30 (step S50).

The similarity calculation unit 60 calculates similarity between the search information and the multimedia information based on a result of analysis performed by the input information analysis unit 40 and a result of analysis performed by the multimedia information analysis unit 50 (step S60).

For example, the similarity calculation unit 60 compares the words obtained by breakdown by morphological analysis performed by the input information analysis unit 40 with the result of analysis performed by the multimedia information analysis unit 50 in order from a word corresponding to a greater number of times the word is repeatedly described in sentences as the search information.

Each of the words obtained by breakdown by morphological analysis performed by the input information analysis unit 40 is weighted. Weighting may herein be set in any manner, and, for example, a weight expressed by an equation (1) below may be applied to each of the words. In the equation (1), Xt is a weight of a word t, nt is the number of times the word appears in a sentence, and S is a total number of times all words in the sentence appear.

$$Xt = nt/S \qquad \ldots(1)$$

The weight applied to the word is not limited to the above-mentioned weight and may be changed based on the preference information on the user, which will be described below. Part-of-speech analysis may be performed to weight a particular part of speech or a particular feature word, such as a noun, a verb, and a number, and to apply a weight of 0 to the other words.

The similarity calculation unit 60 judges that a degree of correlation (similarity) between the search information and the multimedia information is higher when the same word (word as the result of analysis performed by the input information analysis unit 40) appears in a sentence (sentence included in the multimedia information) more frequently. In this case, the similarity calculation unit 60 considers a weight applied to each word. The similarity calculation unit 60 selects multimedia information having similarity equal to higher than a predetermined threshold as a candidate (reply candidate) for information to be provided to the user.

The similarity calculation unit 60 has a function to prepare the reply candidate for the user, and the system can desirably dynamically change a calculation algorism based on a response of the user to a reply.

After the similarity calculation unit 60 calculates similarity, the user preference determination unit 71 determines the preference of the user (a form of the reply required by the user) based on the user information recorded in the user information database 70. Determination of the preference of the user by the user preference determination unit 71 may be made in parallel with or may be made before determination of similarity by the similarity calculation unit 60.

The providing structure construction unit 72 constructs the providing structure (a reply structure) matching the preference of the user determined by the user preference determination unit 71 (step S70).

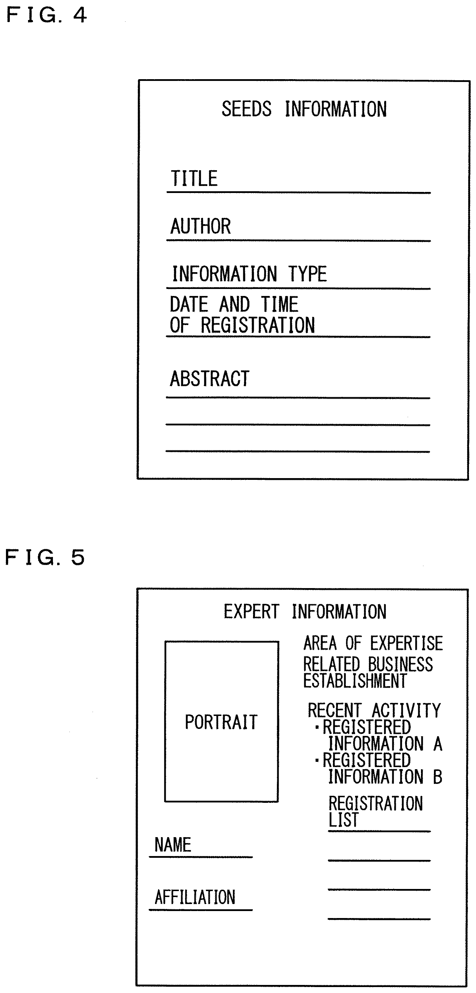

For example, when the user is engaged in a technical job, the providing structure construction unit 72 constructs an abstract (seeds information) of a technical document as illustrated in FIG. 4 as the providing structure. When the user is engaged in a sales-related job, the providing structure construction unit 72 constructs expert information as illustrated in FIG. 5 as the providing structure.

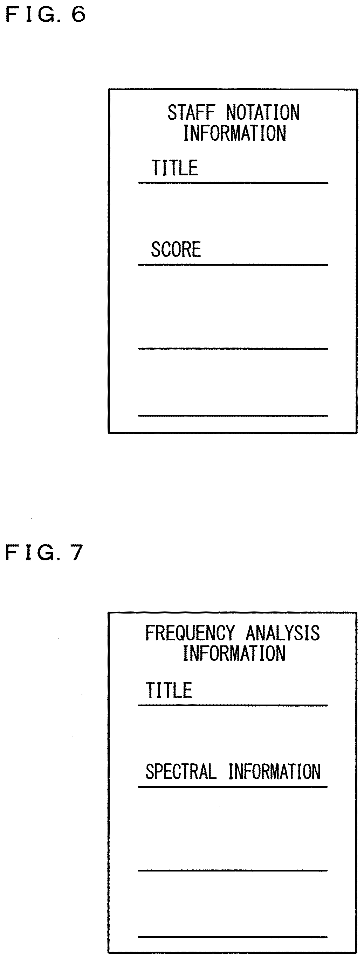

When information relating to the preference of the user is stored in the user information database 70, a providing structure preferentially including information displayed many times during previous use of the user may be constructed. When, as information relating to a preference of a user engaged in a music-related job, information indicating that the user checks a proposal of notes in detail is stored in the user information database 70, for example, the providing structure construction unit 72 constructs staff notation information (score information) as illustrated in FIG. 6 as the providing structure.

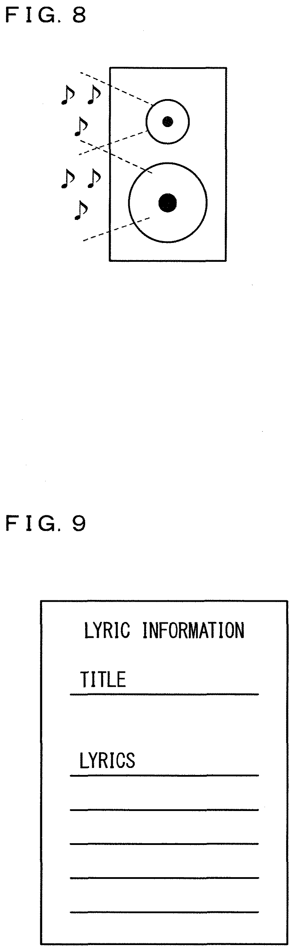

When, as the information relating to the preference of the user engaged in the music-related job, information indicating that the user checks frequency information is stored in the user information database 70, the providing structure construction unit 72 constructs frequency analysis information (spectral information) as illustrated in FIG. 7 as the providing structure. When the user has a preference for output of a sound, the providing structure construction unit 72 constructs output of a sound as illustrated in FIG. 8 as the providing structure. When the user has a preference for check of lyrics, the providing structure construction unit 72 constructs lyric information as illustrated in FIG. 9 as the providing structure.

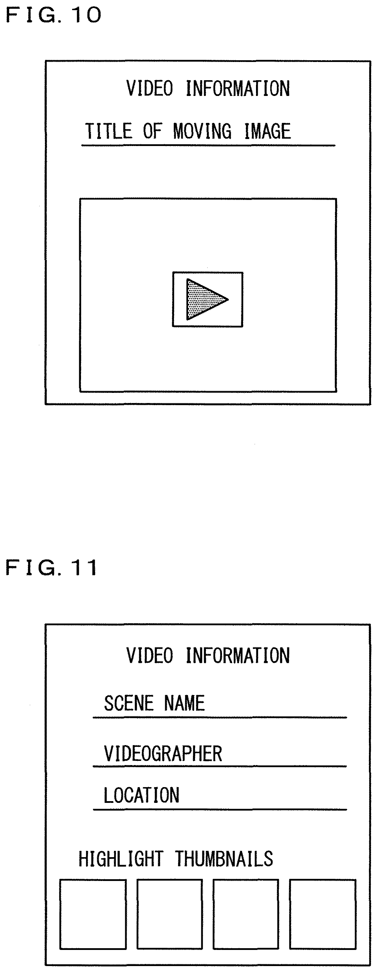

When, as information relating to a preference of a user engaged in a video-related job, information indicating that the user checks a video is stored in the user information database 70, the providing structure construction unit 72 constructs video information as illustrated in FIG. 10 or 11 as the providing structure.

The provided information creation unit 80 selects, from among pieces of multimedia information having high similarity calculated by the similarity calculation unit 60, a piece of multimedia information matching the providing structure constructed by the providing structure construction unit 72. The provided information creation unit 80 inputs (applies) the selected piece of multimedia information to the providing structure to create the provided information (step S80). The provided information creation unit 80 can thereby create the provided information matching the preference of the user.

The providing unit 81 presents the provided information created by the provided information creation unit 80 to the user (step S90).

The user is provided with a function to sort, from among pieces of the provided information provided by the providing unit 81, information matching the preference of the user from information not matching the preference of the user (step S100). When the user selects the information matching the preference thereof (information matching an object of search) (Yes in step S100), the providing unit 81 presents details of the selected information to the user (step S110). On the other hand, when the user selects the information not matching the preference thereof (No in step S100), the preference information receiving unit 90 receives the information not matching the preference of the user. The preference information receiving unit 90 records the information not matching the preference of the user received by the preference information receiving unit in the user information database 70. The preference information receiving unit 90 may record the information matching the preference of the user in the user information database 70.

### 1-3. Effects

According to the information providing apparatus according to Embodiment 1, information preferentially required by the user can be provided in a form intelligible to the user. The user information is stored over time, so that information matching the preference of the user can be provided even when the attribute or the preference of the user is changed. The user information is recorded in advance, so that information can be provided in a form desired by the user during first use.

### Embodiment 2

### 2-1. Configuration

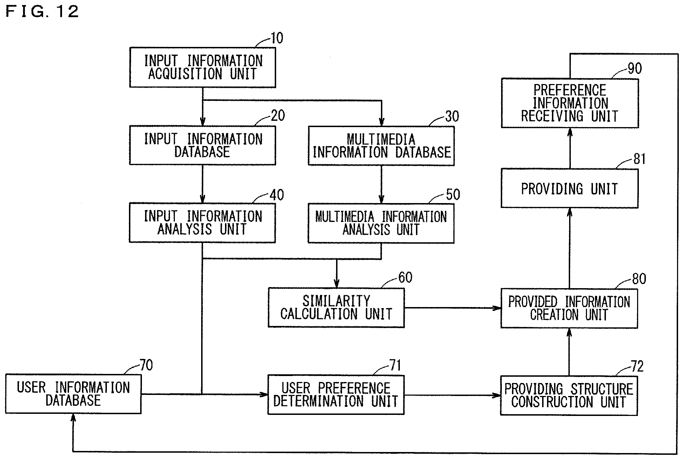

FIG. 12 is a block diagram showing one example of a configuration of an information providing apparatus according to Embodiment 2. As shown in FIG. 12, the information providing apparatus according to Embodiment 2 is characterized in that the input information acquired by the input information acquisition unit 10 is recorded in the multimedia information database 30. The other configuration and operation are similar to those according to Embodiment 1, so that detailed description thereof is omitted herein.

The input information (at least one of text, images, and sounds) acquired by the input information acquisition unit 10 is recorded in the multimedia information database 30.

### 2-2. Operation

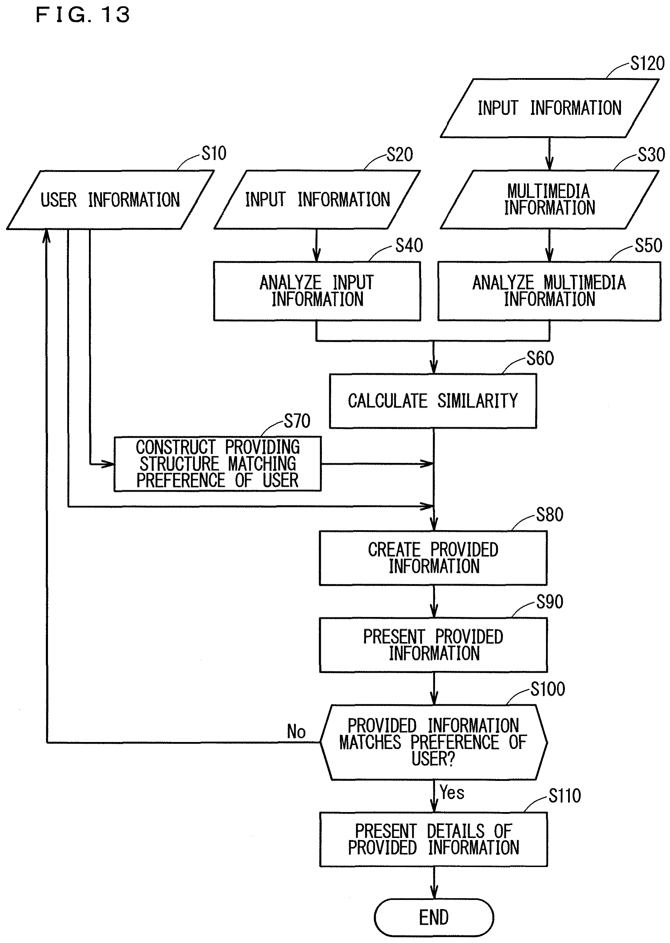

FIG. 13 is a flowchart showing one example of operation of the information providing apparatus according to Embodiment 2. Operation shown in FIG. 13 is characterized in that step S120 has been added to operation shown in FIG. 3. Steps S10 to S110 in FIG. 13 are similar to steps S10 to S110 in FIG. 3, so that detailed description thereof is omitted herein.

The input information acquisition unit 10 acquires the input information input by the user (step S120) and records the acquired input information in the multimedia information database 30 (step S30).

The multimedia information analysis unit 50 performs similar analysis to that performed by the input information analysis unit 40 on the multimedia information recorded in the multimedia information database 30 and the input information acquired by the input information acquisition unit 10 and recorded in the multimedia information database 30 (step S50).

The provided information creation unit 80 creates the provided information similarly to Embodiment 1 (step S80). In this case, the provided information creation unit 80 may create the provided information using the input information acquired by the input information acquisition unit 10 and recorded in the multimedia information database 30.

2-3. Effects

According to the information providing apparatus according to Embodiment 2, not only the multimedia information but also the input information input by the user is a target of the provided information, so that the target of the provided information can be increased to provide more appropriate information to the user.

Embodiment 3

3-1. Configuration

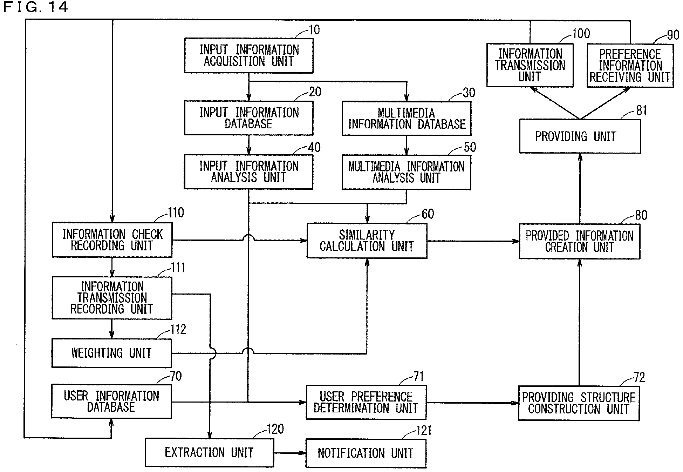

FIG. 14 is a block diagram showing one example of a configuration of an information providing apparatus according to Embodiment 3. As shown in FIG. 14, the information providing apparatus according to Embodiment 3 includes an information transmission unit 100, an information check recording unit 110, an information transmission recording unit 111, a weighting unit 112, an extraction unit 120, and a notification unit 121. The other configuration is similar to that according to Embodiment 2, so that detailed description thereof is omitted herein.

The information transmission unit 100 transmits information (post-provision information) relating to the user after the providing unit 81 provides the provided information.

The information check recording unit 110 records information indicating whether the user has checked the provided information.

The information transmission recording unit 111 records information (transmission/non-transmission information) indicating whether the information transmission unit 100 has transmitted the information relating to the user. Specifically, the information transmission recording unit 111 records information indicating whether the user has queried the provided information.

The weighting unit 112 weights the provided information based on the information recorded by the information transmission recording unit 111. Specifically, the weighting unit 112 increases a weight applied to the provided information queried by the user. The similarity calculation unit 60 calculates similarity similarly to Embodiment 2 and, in this case, calculates similarity considering the provided information weighted by the weighting unit 112.

The extraction unit 120 extracts a provider from the user information database based on the information transmitted by the information transmission unit 100. The provider is herein an entity to provide the multimedia information to the user (an entity to register the multimedia information to be a basis for the provided information in the multimedia information database 30). The information transmitted by the information transmission unit 100 (the queried provided information) and the provider of the information are recorded in the user information database 70 in connection with each other.

The notification unit 121 notifies the provider extracted by the extraction unit 120 that the multimedia information registered by the provider has been provided to the user.

3-2. Operation

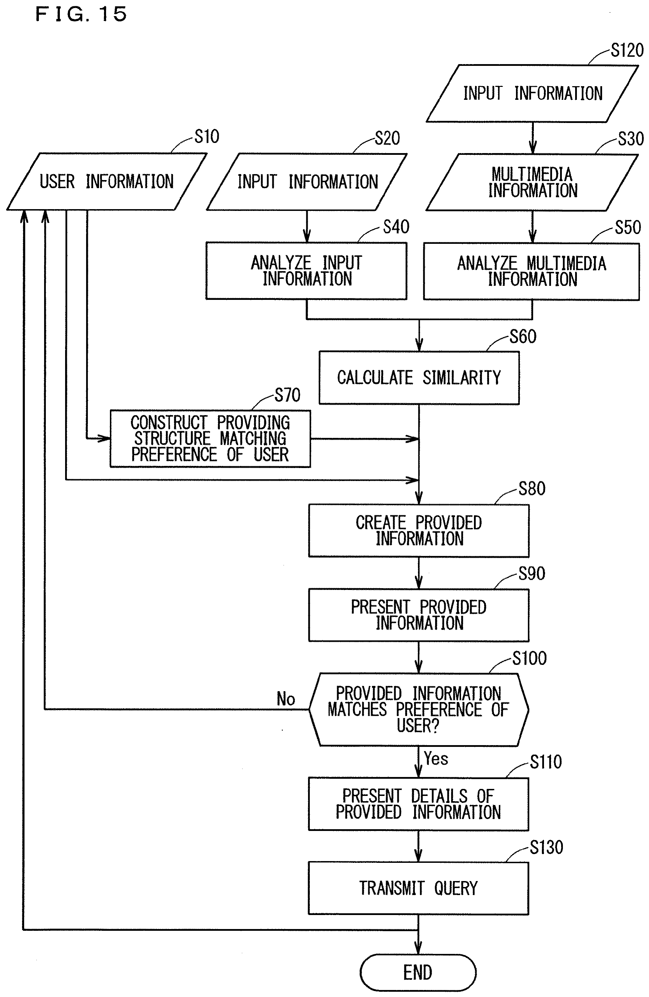

FIG. 15 is a flowchart showing one example of operation of the information providing apparatus according to Embodiment 3. Operation shown in FIG. 15 is characterized in that step S130 has been added to operation shown in FIG. 13. Steps S10 to S120 in FIG. 15 are similar to steps S10 to S120 in FIG. 13, so that detailed description thereof is omitted herein.

The information transmission unit 100 transmits the information (post-provision information) relating to the user after the providing unit 81 provides the provided information (step S130). In this case, the information transmission recording unit 111 records the transmission/non-transmission information. The provided information and the provider of the provided information are recorded in the user information database 70 in connection with each other.

3-3. Effects

According to the information providing apparatus according to Embodiment 3, when the user queries the provided information, the weight is applied to the queried provided information. The similar information can thereby be included in the provided information and presented during subsequent use.

The provider is notified that the multimedia information registered by the provider has been provided to the user. Communication between the user and the provider is thereby facilitated, so that processing to obtain information more desirable for both of them is expected.

Embodiments can freely be combined with each other and can be modified or omitted as appropriate within the scope of the present invention.

While the present invention has been described in detail, the foregoing description is in all aspects illustrative and not restrictive. It is understood that numerous unillustrated modifications can be devised.

EXPLANATION OF REFERENCE SIGNS

| | |
|---|---|
| 10 | input information acquisition unit |
| 20 | input information database |
| 30 | multimedia information database |
| 40 | input information analysis unit |

50      multimedia information analysis unit
60 s    imilarity calculation unit
70      user information database
71      user preference determination unit
72      providing structure construction unit
80      provided information creation unit
81      providing unit
90      preference information receiving unit
100     information transmission unit
110     information check recording unit
111     information transmission recording unit
112     weighting unit
120     extraction unit
121     notification unit
200     display
210     speaker
220     keyboard
230     processor
240     memory
250     HDD
300     information input/output unit
400     arithmetic unit.

## Claims

1.  An information providing apparatus comprising:

    a multimedia information database to record therein multimedia information including at least one of text, images, and sounds;
    an input information acquisition unit to acquire input information input by a user;
    a similarity calculation unit to calculate similarity between the input information acquired by the input information acquisition unit and the multimedia information recorded in the multimedia information database;
    a user information database to record therein user information including an attribute and a preference of the user;
    a providing structure construction unit to construct a providing structure to provide the multimedia information to the user based on the user information recorded in the user information database; and
    a providing unit to provide, to the user, provided information created based on the similarity calculated by the similarity calculation unit and the providing structure constructed by the providing structure construction unit.

2.  The information providing apparatus according to claim 1,
    wherein information relating to behavior of the user in response to the provided information provided by the providing unit is recorded in the user information database.

3.  The information providing apparatus according to claim 1 or 2,
    wherein the similarity calculation unit weights the input information.

4.  The information providing apparatus according to any one of claims 1 to 3,
    wherein the user information is recorded in the user information database before the providing unit provides the provided information.

5.  The information providing apparatus according to any one of claims 1 to 4,

    wherein the input information acquired by the input information acquisition unit is recorded in the multimedia information database, and
    the similarity calculation unit calculates similarity between the input information acquired by the input information acquisition unit and the multimedia information and the input information both recorded in the multimedia information database.

6.  The information providing apparatus according to any one of claims 1 to 5, further comprising:

    - an information transmission unit to transmit post-provision information as information on the user after the providing unit provides the provided information;
    - an information transmission recording unit to record transmission/non-transmission information indicating whether the information transmission unit has transmitted the post-provision information; and
    - a weighting unit to weight the provided information based on the transmission/non-transmission information recorded by the information transmission recording unit.

7.  The information providing apparatus according to any one of claims 1 to 6,

    wherein information relating to a provider to provide the multimedia information to the user is recorded in the user information database, and
    the information providing apparatus further comprises:

        - an information transmission unit to transmit post-provision information as information on the user after the providing unit provides the provided information;
        - an extraction unit to extract the provider from the user information database based on the post-provision information transmitted by the information transmission unit; and

- a notification unit to notify the provider extracted by the extraction unit that the multimedia information provided by the provider has been provided to the user.

8. An information providing method comprising:

- constructing, based on user information including an attribute and a preference of a user, a providing structure to provide information to the user; and
- providing, to the user, provided information created based on the providing structure.

9. An information receiving apparatus comprising:

- a multimedia information database to receive and record therein multimedia information including at least one of text, images, and sounds;
- an input information acquisition unit to receive input information input by a user; a similarity calculation unit to calculate similarity between the input information acquired by the input information acquisition unit and the multimedia information recorded in the multimedia information database;
- a user information database to receive and record therein user information including an attribute and a preference of the user;
- a providing structure construction unit to construct a providing structure to provide the multimedia information to the user based on the user information recorded in the user information database; and
- a providing unit to provide, to the user, provided information created based on the similarity calculated by the similarity calculation unit and the providing structure constructed by the providing structure construction unit.

F I G. 1

| | | |
|---|---|---|
| INPUT INFORMATION ACQUISITION UNIT /10 | MULTIMEDIA INFORMATION DATABASE /30 | PREFERENCE INFORMATION RECEIVING UNIT /90 |
| INPUT INFORMATION DATABASE /20 | | PROVIDING UNIT /81 |
| INPUT INFORMATION ANALYSIS UNIT /40 | MULTIMEDIA INFORMATION ANALYSIS UNIT /50 | |
| | SIMILARITY CALCULATION UNIT /60 | PROVIDED INFORMATION CREATION UNIT /80 |
| USER INFORMATION DATABASE /70 | USER PREFERENCE DETERMINATION UNIT /71 | PROVIDING STRUCTURE CONSTRUCTION UNIT /72 |

F I G. 2

300

400

INFORMATION
INPUT/OUTPUT UNIT

ARITHMETIC UNIT

200

210

230

240

250

| DISPLAY | SPEAKER |
|---------|---------|

| PROCESSOR | MEMORY | HDD |
|-----------|--------|-----|

220

| KEYBOARD |
|----------|

# F I G. 3

S10

USER INFORMATION

S20

INPUT INFORMATION

S30

MULTIMEDIA INFORMATION

S40

ANALYZE INPUT INFORMATION

S50

ANALYZE MULTIMEDIA INFORMATION

S60

CALCULATE SIMILARITY

S70

CONSTRUCT PROVIDING STRUCTURE MATCHING PREFERENCE OF USER

S80

CREATE PROVIDED INFORMATION

S90

PRESENT PROVIDED INFORMATION

S100

PROVIDED INFORMATION MATCHES PREFERENCE OF USER?

No

Yes

S110

PRESENT DETAILS OF PROVIDED INFORMATION

END

**F I G. 4**

```
┌─────────────────────────────────┐
│         SEEDS  INFORMATION      │
│                                 │
│                                 │
│   TITLE                         │
│   ──────────────────────────    │
│   AUTHOR                        │
│   ──────────────────────────    │
│   INFORMATION  TYPE             │
│   ──────────────────────────    │
│   DATE  AND  TIME               │
│   OF  REGISTRATION              │
│   ──────────────────────────    │
│                                 │
│   ABSTRACT                      │
│   ──────────────────────────    │
│   ──────────────────────────    │
│   ──────────────────────────    │
└─────────────────────────────────┘
```

**F I G. 5**

```
┌─────────────────────────────────┐
│         EXPERT  INFORMATION     │
│                  AREA OF EXPERTISE │
│  ┌──────────┐   RELATED BUSINESS │
│  │          │   ESTABLISHMENT    │
│  │          │   RECENT ACTIVITY  │
│  │          │    ·REGISTERED     │
│  │ PORTRAIT │      INFORMATION A │
│  │          │    ·REGISTERED     │
│  │          │      INFORMATION B │
│  │          │   REGISTRATION     │
│  └──────────┘   LIST             │
│                 ─────────────    │
│  NAME                            │
│  ──────────     ─────────────    │
│                                  │
│  AFFILIATION    ─────────────    │
│  ──────────                      │
│                 ─────────────    │
└─────────────────────────────────┘
```

F I G. 6

STAFF NOTATION
INFORMATION

TITLE
_____

SCORE
_____

_____

_____

F I G. 7

FREQUENCY ANALYSIS
INFORMATION

TITLE
_____

SPECTRAL INFORMATION
_____

_____

_____

# FIG. 8

# FIG. 9

LYRIC INFORMATION

TITLE

LYRICS

FIG. 10

VIDEO INFORMATION

TITLE OF MOVING IMAGE

▷

FIG. 11

VIDEO INFORMATION

SCENE NAME

VIDEOGRAPHER

LOCATION

HIGHLIGHT THUMBNAILS

F I G. 12

```
                    ┌──────────────────┐ ~10
                    │ INPUT INFORMATION│
                    │ ACQUISITION UNIT │
                    └──────────────────┘
                          │       │
                          ▼       │
       ┌──────────────────┐ ~20   │
       │ INPUT INFORMATION│       ▼
       │    DATABASE      │   ┌──────────────────────┐ ~30
       └──────────────────┘   │     MULTIMEDIA       │
              │               │ INFORMATION DATABASE │
              ▼               └──────────────────────┘
       ┌──────────────────┐ ~40      │
       │ INPUT INFORMATION│          ▼
       │  ANALYSIS UNIT   │   ┌──────────────────────┐ ~50
       └──────────────────┘   │ MULTIMEDIA INFORMATION│
              │               │    ANALYSIS UNIT      │
              │               └──────────────────────┘
              │                      │
              │                      ▼
              │               ┌──────────────┐ ~60
              │               │  SIMILARITY  │
              │               │ CALCULATION UNIT│
              │               └──────────────┘
              │
┌──────────────┐ ~70   ┌──────────────┐ ~71   ┌──────────────────┐ ~72
│USER INFORMATION│     │ USER PREFERENCE│      │PROVIDING STRUCTURE│
│   DATABASE    │──────│DETERMINATION UNIT│────│ CONSTRUCTION UNIT │
└──────────────┘       └──────────────┘       └──────────────────┘
```

INPUT INFORMATION ACQUISITION UNIT — 10

INPUT INFORMATION DATABASE — 20

MULTIMEDIA INFORMATION DATABASE — 30

INPUT INFORMATION ANALYSIS UNIT — 40

MULTIMEDIA INFORMATION ANALYSIS UNIT — 50

SIMILARITY CALCULATION UNIT — 60

USER INFORMATION DATABASE — 70

USER PREFERENCE DETERMINATION UNIT — 71

PROVIDING STRUCTURE CONSTRUCTION UNIT — 72

PROVIDED INFORMATION CREATION UNIT — 80

PROVIDING UNIT — 81

PREFERENCE INFORMATION RECEIVING UNIT — 90

F I G. 1 3

```
                                                      ┌─S120
                                            ┌──────────────────┐
                                            │  INPUT  INFORMATION │
                                            └──────────────────┘
                                                      │
         ┌─S10              ┌─S20                      ▼        ┌─S30
    ┌──────────────┐   ┌──────────────┐        ┌──────────────┐
    │ USER INFORMATION │   │ INPUT  INFORMATION │        │   MULTIMEDIA   │
    └──────────────┘   └──────────────┘        │  INFORMATION   │
                              │                 └──────────────┘
                              ▼    ┌─S40              │    ┌─S50
                        ┌──────────────┐        ┌──────────────┐
                        │ ANALYZE  INPUT │        │ANALYZE MULTIMEDIA│
                        │  INFORMATION   │        │  INFORMATION   │
                        └──────────────┘        └──────────────┘
                              │                        │
                              │                        ▼      ┌─S60
                              │                 ┌──────────────┐
                              │                 │ CALCULATE SIMILARITY │
              ┌─S70           │                 └──────────────┘
        ┌──────────────┐      │                        │
        │CONSTRUCT PROVIDING│  │                        │
        │STRUCTURE MATCHING │──┼───────────────────────▶│
        │ PREFERENCE OF USER │  │                        │
        └──────────────┘      │                        ▼
                              └───────────────────────▶│
                                                       │    ┌─S80
                                                ┌──────────────┐
                                                │ CREATE PROVIDED │
                                                │  INFORMATION   │
                                                └──────────────┘
                                                       │    ┌─S90
                                                ┌──────────────┐
                                                │ PRESENT PROVIDED │
                                                │  INFORMATION   │
                                                └──────────────┘
                                                       │    ┌─S100
                               No              ┌──────────────┐
                        ◀─────────────────────│PROVIDED INFORMATION│
                                                │MATCHES PREFERENCE OF│
                                                │     USER?      │
                                                └──────────────┘
                                                       │ Yes  ┌─S110
                                                ┌──────────────┐
                                                │PRESENT DETAILS OF│
                                                │PROVIDED INFORMATION│
                                                └──────────────┘
                                                       │
                                                   ┌──────┐
                                                   │  END  │
                                                   └──────┘
```

FIG. 14

# F I G. 1 5

## INTERNATIONAL SEARCH REPORT

| International application No. |
| --- |
| **PCT/JP2023/004942** |

**A.    CLASSIFICATION OF SUBJECT MATTER**

*G06F 16/435*(2019.01)i

FI:    G06F16/435

According to International Patent Classification (IPC) or to both national classification and IPC

**B.    FIELDS SEARCHED**

Minimum documentation searched (classification system followed by classification symbols)

G06F16/00-16/958

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | US 5742816 A (INFONAUTICS CORPORATION) 21 April 1998 (1998-04-21) <br> entire text, all drawings | 1-9 |
| A | CN 102184185 A (BEIJING BAIDU NETWORK TECHNOLOGY CO., LTD.) 14 September 2011 (2011-09-14) <br> entire text, all drawings | 1-9 |
| A | JP 2007-150764 A (SOFTBANK BB CORP.) 14 June 2007 (2007-06-14) <br> entire text, all drawings | 1-9 |
| A | WO 2016/075967 A1 (SONY CORPORATION) 19 May 2016 (2016-05-19) <br> entire text, all drawings | 1-9 |
| A | JP 2005-524263 A (ELECTRONICS AND TELECOMMUNICATIONS RESEARCH INSTITUTE) 11 August 2005 (2005-08-11) <br> entire text, all drawings | 1-9 |
| A | JP 2011-107808 A (VICTOR CO OF JAPAN LTD.) 02 June 2011 (2011-06-02) <br> entire text, all drawings | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 April 2023** | **18 April 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/004942**

| Patent document cited in search report | | | Publication date (day/month/year) | Patent family member(s) | | | Publication date (day/month/year) |
|---|---|---|---|---|---|---|---|
| US | 5742816 | A | 21 April 1998 | WO | 1997/010537 | A2 | |
| | | | | AU | 7202696 | A | |
| CN | 102184185 | A | 14 September 2011 | (Family: none) | | | |
| JP | 2007-150764 | A | 14 June 2007 | WO | 2007/061090 | A1 | |
| | | | | TW | 200727701 | A | |
| WO | 2016/075967 | A1 | 19 May 2016 | US | 2017/0322714 | A1 | |
| JP | 2005-524263 | A | 11 August 2005 | US | 2005/0180578 | A1 | |
| | | | | WO | 2003/091870 | A1 | |
| | | | | EP | 1499949 | A1 | |
| | | | | KR | 10-0919884 | B1 | |
| | | | | CN | 1659507 | A | |
| | | | | AU | 2003227377 | A1 | |
| JP | 2011-107808 | A | 02 June 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000250944 A